# EUROPÄISCHE PATENTSCHRIFT

(11) **EP 2 855 058 B1**
(45) Veröffentlichungstag und Bekanntmachung des Hinweises auf die Patenterteilung: **17.06.2020**
(21) Anmeldenummer: 13718165.7
(22) Anmeldetag: 18.04.2013
(51) Int. Cl.: B23B 31/11, B23C 5/10

(54) **WERKZEUGAUFNAHME FÜR EIN EINSCHRAUBWERKZEUG**
TOOL RECEPTACLE FOR A SCREW-IN TOOL
RACCORDEMENT D'OUTIL À VISSER

(30) Priorität: 29.05.2012 DE 102012104606
(43) Veröffentlichungstag der Anmeldung: 08.04.2015
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Charrier Rapp & Liebau
(86) Internationale Anmeldenummer: PCT/EP2013/058046
(87) Internationale Veröffentlichungsnummer: WO 2013/178401

(56) Entgegenhaltungen:
- DE-A1- 3 912 503
- JP-A- 2001 087 929
- US-A- 1 615 233
- US-A- 4 945 793
- US-A1- 2011 123 255
- US-A1- 2012 093 602

## Beschreibung

Die Erfindung betrifft eine Werkzeugaufnahme für ein Einschraubwerkzeug und eine Werkzeuganordnung mit einem Einschraubwerkzeug und einer derartigen Werkzeugaufnahme.

Es sind bereits für Einschraubwerkzeuge bestimmte Werkzeugaufnahmen bekannt, bei denen ein in der Regel zylindrischer Grundkörper eine Aufnahmeöffnung mit einer konischen inneren Auflagefläche für eine entsprechend konische äußere Anlagefläche des Einschraubwerkzeugs enthält. In dem Grundköper ist üblicherweise ein Innengewinde zum Eingriff eines entsprechenden Außengewindes an den Einschraubwerkzeugen vorgesehen. Da zwischen dem Außengewinde am Einschraubwerkzeug und dem zugehörigen Innengewinde an der Werkzeugaufnahme nach einer Zentrierung durch die konischen Auflage- bzw. Anlageflächen kein radialer Ausgleich möglich ist, müssen die Werkzeugaufnahmen und die entsprechenden Einschraubwerkzeuge äußerst genau gefertigt werden, um einen axialen Versatz zwischen dem Außen- und Innengewinde zu vermeiden. Ein solcher Versatz kann beim Spannen zu unerwünschten Verspannungen und dadurch bedingten Rundlauffehlern der Werkzeuge kommen. Neben einer Verschlechterung der Rundlaufeigenschaften kann eine außermittige Belastung außerdem zu Beschädigungen an den Gewinden führen. Dies ist besonders für die üblicherweise aus Hartmetall oder anderen Hartstoffen bestehenden Einschraubwerkzeuge von Bedeutung, da bei diesen eine ungleichmäßige Belastung relativ schnell zu Beschädigungen führen kann.

Aus der JP 2001 087929 A ist eine gattungsgemäße Werkzeugaufnahme für ein Einschraubwerkzeug bekannt. Die Werkzeugaufnahme enthält einen Grundkörper, der einen Aufnahmebereich mit einer konischen Auflagefläche zur Anlage einer entsprechenden konischen Anlagefläche des Einschraubwerkzeugs enthält. In dem Grundkörper ist ein quer zur Längsachse des Grundkörpers beweglicher und gegenüber dem Grundkörper verdrehgesicherter Einsatz mit einem Gegengewinde für ein Gewinde am Einschraubwerkzeug angeordnet.

Aus der US 2011/0123255 A1 ist eine weitere Werkzeugaufnahme für ein Einschraubwerkzeug bekannt. Diese Werkzeugaufnahme ist in Einklang mit dem Oberbegriff des Anspruchs 1 und enthält einen Grundkörper, in dem ein quer zur Längsachse des Grundkörpers beweglicher und gegenüber dem Grundkörper verdrehgesicherter Einsatz mit einem Außengewinde zum Aufschrauben eines Einschraubwerkzeugs angeordnet ist. Der Grundkörper weist eine konische innere Auflagefläche zur Anlage einer entsprechenden konischen äußeren Anlagefläche des Einschraubwerkzeugs auf.

Aufgabe der Erfindung ist es, eine Werkzeugaufnahme für ein Einschraubwerkzeug und eine Werkzeuganordnung mit einem Einschraubwerkzeug und einer derartigen Werkzeugaufnahme zu schaffen, bei denen die Radial- oder Kippbewegung des Einsatzes innerhalb des Grundkörpers gedämpft und die Schwingungen zwischen der Werkzeugaufnahme und dem Einschraubwerkzeug vermindert werden können.

Diese Aufgabe wird durch eine Werkzeugaufnahme mit den Merkmalen des Anspruchs 1 und durch eine Werkzeuganordnung mit den Merkmalen des Anspruchs 14 gelöst. Zweckmäßige Weiterbildungen und vorteilhafte Ausführungsformen der Erfindung sind Gegenstand der Unteransprüche.

Bei der erfindungsgemäßen Werkzeugaufnahme ist in dem Grundkörper ein quer zur Längsachse des Grundkörpers beweglicher und gegenüber dem Grundkörper verdrehgesicherter Einsatz angeordnet, an dem sich das Gewinde zum Eingriff eines entsprechendes Gegengewindes am Einschraubwerkzeug befindet. Das an der Werkzeugaufnahme befindliche Gewinde kann sich so an das Gegengewinde des Einschraubwerkzeugs anpassen, wenn z.B. die Mittelachsen von Gewinde und Gegengewinde nicht exakt fluchten, wodurch Beschädigungen am Gewinde oder Beeinträchtigungen der Rundlaufgenauigkeit vermieden werden können. Der Einsatz ist nicht fest, sondern schwimmend in den Grundkörper angeordnet und bietet dadurch eine radiale Ausgleichsmöglichkeit. Dies ist gerade bei der Verwendung eines Einschraubwerkzeugs aus Hartmetall von Vorteil, da durch die Ausgleichsmöglichkeit des Einsatzes die Bruchgefahr des spröden Werkstoffs speziell am Gewinde reduziert wird. Zwischen dem Einsatz und dem Grundkörper kann mindestens ein Dämpfungselement vorgesehen sein. Dadurch kann die Radial- oder Kippbewegung des Einsatzes innerhalb des Grundkörpers gedämpft werden.

Zudem wird durch das Dämpfungselement auch die Übertragung von Schwingungen zwischen der Werkzeugaufnahme und dem Einschraubwerkzeug vermindert.

In einer besonders zweckmäßigen Ausführung ist der Einsatz mit einem radialen Spiel innerhalb des Grundkörpers der Werkzeugaufnahme angeordnet. Dadurch kann der Einsatz eine Radial- oder Kippbewegung ausführen, um so einen evtl. Versatz zwischen dem Gewinde am Einschraubwerkzeug und dem dazugehörigen Gegengewinde an der Werkzeugaufnahme auszugleichen.
Zur verdrehgesicherten Anordnung des Einsatzes innerhalb der Grundkörpers kann der Einsatz über eine Formschlussverbindung mit dem Grundkörper verbunden sein. Dies kann z.B. durch eine bestimmte Formgebung wie z.B. Keilwellenprofil, Kerbverzahnungen, Polygonprofil oder durch zusätzliche Elemente wie Passfedern, Gleitfedern oder Querstifte erfolgen.

In einer einfachen und dennoch zweckmäßigen Ausführung kann die Formschlussverbindung z.B. über einen Querstift erfolgen, der durch eine Querbohrung im Grundkörper und eine Querbohrung im Einsatz verläuft. Die Beweglichkeit des Einsatzes innerhalb des Grundkörpers kann dadurch gewährleistet werden, dass der Innendurchmesser der Querbohrung im Einsatz größer als der Außendurchmesser des Querstifts ist. Die Beweglichkeit des Querstifts kann auch dadurch erreicht werden, dass die Bohrung im Grundkörper größer als der Durchmesser des Querstifts ist.

Eine weitere Formschlussverbindung kann dadurch erreicht werden, dass der Einsatz ein z.B. als Polygon ausgebildetes Außenprofil zum formschlüssigen Eingriff in ein dazu passendes Innenprofil im Grundkörper enthält. Der Einsatz kann z.B. ein als Außensechskant ausgeführtes Außenprofil aufweisen und mit einem kleinen radialen Spiel in einem als Innensechskant ausgebildeten Innenprofil im Grundkörper angeordnet sein.

In einer weiteren vorteilhaften Ausführung weist der Aufnahmebereich des Grundkörpers mehrere konische Auflageflächen auf. Dadurch kann eine verbesserte Abstützung und Führung des Einschraubwerkzeugs innerhalb der Werkzeugsaufnahme erreicht werden. Der Aufnahmebereich des Grundkörpers kann z.B. eine an der vorderen Stirnseite des Grundkörpers angeordnete erste konische Auflagefläche für eine erste Anlagefläche des Einschraubwerkzeugs und eine im Inneren des Grundkörpers angeordnete zweite konische Auflagefläche für eine zweite Anlagefläche des Einschraubwerkzeugs enthalten. Die beiden konischen Auflageflächen können gleiche oder unterschiedliche Kegelwinkel aufweisen. Dies ermöglicht einerseits eine einfache Fertigung, es ist aber andererseits auch möglich die konischen Anlageflächen für verschiedene Aufgaben, wie beispielsweise eine gute radiale Zentrierung oder eine gute axiale Abstützung, auszulegen und diese einfach an die verschiedenen konstruktiven Randbedingungen anzupassen.

Die an den Werkzeugkopf angrenzende erste konische Anlagefläche des Einschraubwerkzeugs und die dazugehörige konische erste Auflagefläche an der Stirnseite des Grundkörpers weisen vorzugsweise einen relativ großen Kegelwinkel auf. Hier hat sich ein Kegelwinkel von 140° bis 179°, vorzugsweise 170° als günstig herausgestellt. In einer bevorzugten Ausgestaltung schließt sich an diese Fläche am Einschraubwerkzeug die zweite konische Anlagefläche und an dem Grundkörper die dazugehörige zweite konische Auflagefläche an. Diese zweite Anlagefläche und die dazu korrespondierende zweite Auflagefläche weisen vorzugsweise relativ kleine Kegelwinkel von 1° bis 40°, vorzugsweise 10° auf. Es ist aber auch möglich zwischen den beiden konischen Flächen einen z.B. zylindrischen Zwischenbereich vorzusehen. Ein Doppelkonus der beschriebenen Art mit zwei unterschiedlichen Kegelwinkeln hat den Vorteil, dass der kleine Kegelwinkel eine gute Zentrierung des Einschraubwerkzeugs in der Werkzeugaufnahme und der große Kegelwinkel eine zusätzliche Zentrierung aber mit stark reduzierten Aufspreizkräften an der Werkzeugaufnahme ermöglicht. Zudem wird durch die konische erste Anlagefläche die Steifigkeit des Werkzeugs erhöht, da das Werkzeug bei radialer Belastung nicht abgleiten kann.

Das zum Gewinde am Einschraubwerkzeug gehörende Gegengewinde ist bevorzugt als Innengewinde ausgeführt. Es kann aber auch als Außengewinde zum Eingriff in ein entsprechendes Innengewinde am Einschraubwerkzeug ausgeführt sein. Das Gewinde am Einschraubwerkzeug und das dazugehörige Gegengewinde am Einsatz können als Spitzgewinde, Trapezgewinde, Flachgewinde, Rundgewinde, Sägezahngewinde oder dgl. ausgebildet sein.

Der Einsatz kann als eine vollständig innerhalb des Grundkörpers angeordnete kürzere Hülse ausgebildet sein oder über die hintere Stirnseite des Grundkörpers hinaus vorstehen und an seinem dem Gegengewinde gegenüberliegenden hinteren Ende einen Ringabsatz zur Anlage an der hinteren Stirnseite des Grundkörpers aufweisen.

Weitere Besonderheiten und Vorzüge der Erfindung ergeben sich aus der folgenden Beschreibung bevorzugter Ausführungsbeispiele anhand der Zeichnungen. Es zeigen:
- **Figur 1**: ein erstes Ausführungsbeispiel einer Werkzeuganordnung mit einer Werkzeugaufnahme und einem Einschraubwerkzeug in einem Längsschnitt;
- **Figur 2**: eine Schnittansicht entlang der Linie I-I von Figur 1;
- **Figur 3**: ein zweites Ausführungsbeispiel einer Werkzeuganordnung mit einer Werkzeugaufnahme und einem Einschraubwerkzeug in einem Längsschnitt und
- **Figur 4**: eine Schnittansicht entlang der Linie I-I von Figur 3.

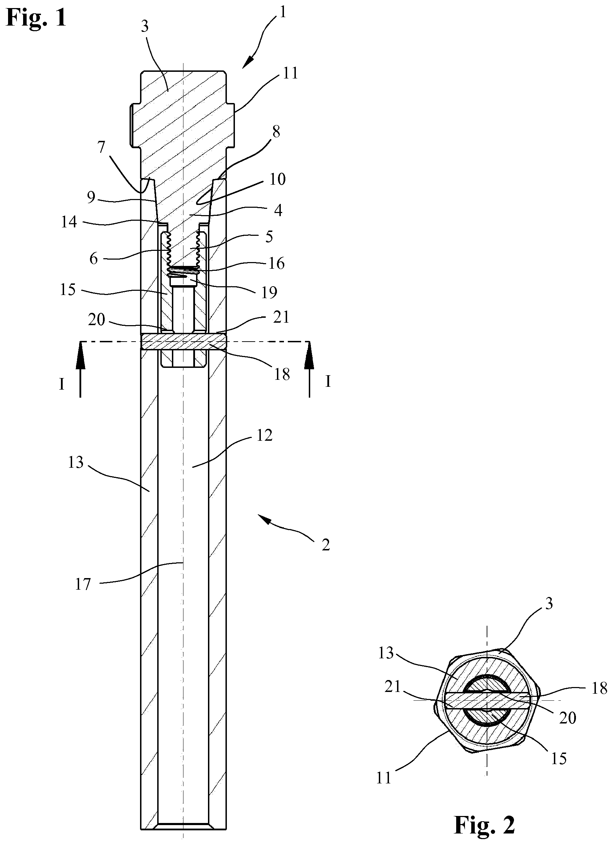

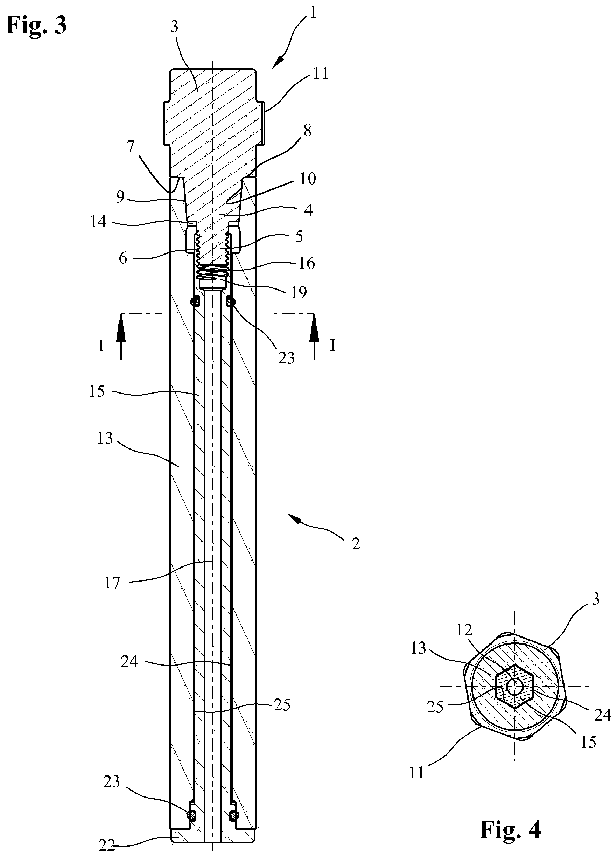

In den Figuren 1 und 3 sind zwei Ausführungsbeispiele einer Werkzeuganordnung mit einem Einschraubwerkzeug 1 und einer zugehörigen Werkzeugaufnahme 2 in einem Längsschnitt gezeigt. Das Einschraubwerkzeug 1 weist einen z.B. als Fräser ausgebildeten Werkzeugkopf 3, einen sich konisch nach hinten verjüngenden Werkzeugschaft 4 und einen zylindrischen Befestigungszapfen 5 mit einem hier als Außengewinde ausgeführten Gewinde 6 auf.

Zwischen dem Werkzeugkopf 3 und dem Befestigungszapfen 5 ist ein Abstützbereich mit einer ersten konischen Anlagefläche 7 für eine entsprechende erste konische Auflagefläche 8 der Werkzeugaufnahme 2 und einer zweiten konischen Anlagefläche 9 für eine zweite konische Auflagefläche 10 im Inneren der Werkzeugaufnahme 2 vorgesehen. Die Abstützung und Führung des Einschraubwerkzeugs 1 innerhalb der Werkzeugsaufnahme 2 erfolgt somit über einen Doppelkonus, der für eine verbesserte Zentrierung und erhöhte Abstützwirkung sorgt.

Der Werkzeugkopf 3 weist an seiner Außenseite mehrere über den Umfang verteilte Schlüsselflächen 11 auf, die zum Einschrauben des Einschraubwerkzeug 1 in die Werkzeugaufnahme 2 dienen. Die Schlüsselflächen 11 können aber auch zum automatischen Werkzeugwechsel verwendet werden.

Die zu dem Einschraubwerkzeug 1 gehörende Werkzeugaufnahme 2 enthält einen hier mit einer Durchgangsöffnung 12 versehenen hohlzylindrischen Grundkörper 13, der einen vorderen Aufnahmebereich 14 mit der ersten konischen Auflagefläche 8 an der vorderen Stirnseite des Grundkörpers 13 und der zweiten konischen Auflagefläche 10 im Inneren des Grundkörpers 13 enthält. In dem Grundkörper 13 ist ein Einsatz 15 angeordnet, der ein zu dem Gewinde 6 des Einschraubwerkzeugs 1 passendes und hier als Innengewinde ausgebildetes Gegengewinde 16 aufweist. Der Einsatz 15 ist innerhalb des Grundkörpers 13 derart angeordnet, dass er mit einem vorgegebenen Spiel quer zur Längsachse 17 des Grundkörpers 13 bewegbar ist.

Die Werkzeugaufnahme 2 kann einstückig ausgeführt sein und eine Schnittstelle zur Verbindung mit einer Maschinenspindel aufweisen. Die Werkzeugaufnahme kann aber auch z.B. in Form einer Verlängerung oder eines Adapterstücks ausgeführt sein, die selbst wieder in eine andere Werkzeugaufnahme eingespannt ist.

Bei der in den Figuren 1 und 2 gezeigten Ausführung ist der Einsatz 15 mit einem radialen Spiel innerhalb der Durchgangsöffnung 12 des Grundkörpers 13 angeordnet und gegenüber dem Grundkörper 13 durch einen Querstift 18 gesichert. Der Einsatz 15 ist als Hülse mit einem ringförmigen Querschnitt ausgeführt. Auch die Durchgangsöffnung 12 des Grundkörpers 13 weist einen kreisrunden Querschnitt mit einem etwas größeren Innendurchmesser als der Außendurchmesser des Einsatzes 15 auf.

Der hülsenförmige Einsatz 15 enthält im vorderen Teil eine als Gewindebohrung ausgeführte Längsbohrung 19 mit dem als Innengewinde ausgeführten Gegengewinde 16. In dem gewindefreien hinteren Teil des hülsenfömigen Einsatzes 15 ist eine innere Querbohrung 20 für den Querstift 18 vorgesehen. Der Querstift 18 erstreckt sich durch eine durchgehende äußere Querbohrung 21 in dem Grundköper 13 und die innere Querbohrung 20 im Einsatz 15. Während der Querstift 18 fest in der durch den Grundkörper 13 verlaufenden äußeren Querbohrung 21 sitzt, ist zwischen der inneren Querbohrung 20 im Einsatz 15 und dem Querstift 18 ein Spiel vorgesehen, so dass der Einsatz 15 eine leichte Radialbewegung oder eine leichte Kippbewegung innerhalb des Grundkörpers 13 ausführen kann, aber dennoch gegen Verdrehen gegenüber dem Grundkörper 13 gesichert ist. Dadurch dreht sich der Einsatz 15 beim Einschrauben des Einschraubwerkzeugs 1 nicht mit, kann sich aber leicht radial bewegen oder kippen und dadurch an das Gewinde 6 des Einschraubwerkzeugs 1 anpassen.

Bei der in den Figuren 3 und 4 gezeigten Ausführung ragt der innerhalb des Grundkörpers 13 quer zu dessen Längsachse bewegliche Einsatz 15 über die hintere Stirnseite des Grundkörpers 13 hinaus und weist an seinem dem Gegengewinde 16 gegenüberliegenden hinteren Ende einen Ringabsatz 22 zur Anlage an der hinteren Stirnseite auf. Durch den Ringabsatz 22 kann beim Einschrauben des Einschraubwerkzeugs 1 ein Herausziehen des Einsatzes nach vorne zum Einschraubwerkzeug 1 hin verhindert werden. Innerhalb des Grundkörpers 13 kann außerdem ein nicht dargestellter Sprengring oder ein anderes Sicherungselement angeordnet sein, durch welches ein Herausfallen des Einsatzes nach hinten verhindert wird. Zwischen dem Einsatz 15 und dem Grundkörper 13 sind in Figur 3 erkennbare obere und untere Dämpfungselemente 23 angeordnet. Durch die z.B. als O-Ringe ausgeführten Dämpfungselemente 23 können die Querbewegung des Einsatzes 15 innerhalb des Grundkörpers 13 sowie die Schwingungen des Gesamtsystems gedämpft werden.

Der in der Figur 3 dargestellte Einsatz 15 kann auch im Bereich seines dem Gewinde gegenüberliegenden Endes mit dem Grundkörper 13 z.B. durch Verschrauben, Verkleben, durch eine Presspassung oder eine andere geeignete Verbindung fest mit dem Grundkörper verbunden sein. In einer derartigen Ausgestaltung ist die Verwendung eines Ringabsatzes 22 nicht nötig und der Einsatz 15 muss auch nicht über den Grundkörper 13 hinausragen. Der Einsatz 15 muss jedoch in diesen Fällen eine gewisse Länge aufweisen, um durch elastische Biegung die radiale Beweglichkeit zu gewährleisten. Eine zusätzliche Verdrehsicherung kann damit entfallen.

Gemäß Figur 4 weist der in Figur 3 dargestellte Einsatz 15 ein als Außensechskant ausgebildetes Außenprofil 24 zum formschlüssigen Eingriff in ein als Innensechskant ausgeführtes Innenprofil 25 des Grundkörpers auf. Das Innenprofil 25 hat etwas größere Abmessungen als das Außenprofil 24, so dass auch hier der Einsatz 15 radial beweglich, jedoch durch die Sechskantverbindung gegenüber dem Grundkörpers 13 verdrehgesichert in dem Grundkörper 13 angeordnet ist.

Bei der in den Figuren 1 bis 4 dargestellten Ausführung sind das Gewinde 6 des Einschraubwerkzeugs 1 und das dazu gehörige Gegengewinde 16 der Werkzeugaufnahme 2 als Spitzgewinde ausgeführt. Das Gewinde 6 und das dazu passende Gegengewinde 16 können aber auch als Trapezgewinde, Flachgewinde, Rundgewinde, Sägezahngewinde oder dgl. ausgebildet sein.

Aus den Figuren 1 und 3 ist ersichtlich, dass die an den Werkzeugkopf 3 angrenzende erste konische Anlagefläche 7 des Einschraubwerkzeugs 1 und die dazugehörige konische erste Auflagefläche 8 an der Stirnseite des Grundkörpers 13 vorzugsweise einen relativ großen Kegelwinkel aufweisen. Hier hat sich ein Kegelwinkel von 140° bis 179°, vorzugsweise 170° als günstig herausgestellt. An diese erste Anlagefläche 7 des Einschraubwerkzeugs 2 schließt sich die zweite konische Anlagefläche 9 und an. Auch an die erste Auflagefläche 8 des Grundkörpers 13 schließt sich die zu der zweiten Anlagefläche 9 gehörende zweite konische Auflagefläche 10 an. Diese zweite Anlagefläche 9 und die dazu korrespondierende zweite Auflagefläche 10 weisen vorzugsweise relativ kleine Kegelwinkel von 1° bis 40°, vorzugsweise 10° auf.

## Patentansprüche

1. Werkzeugaufnahme (2) für ein Einschraubwerkzeug (1) mit einem Grundkörper (13), der einen Aufnahmebereich (14) mit mindestens einer konischen Auflagefläche (10) zur Anlage einer entsprechenden konischen Anlagefläche (9) des Einschraubwerkzeugs (1) enthält, wobei in dem Grundkörper (13) ein quer zur Längsachse (17) des Grundkörpers (13) beweglicher und gegenüber dem Grundkörper (13) verdrehgesicherter Einsatz (15) mit einem Gegengewinde (16) für ein Gewinde (6) am Einschraubwerkzeug (1) angeordnet ist, **dadurch gekennzeichnet, dass** zwischen dem Einsatz (15) und dem Grundkörper (13) mindestens ein Dämpfungselement (23) zur Dämpfung der Querbewegung des Einsatzes (15) innerhalb des Grundkörpers (13) und zur Dämpfung von Schwingungen zwischen dem Einsatz (15) und dem Grundkörper (13) angeordnet ist.

2. Werkzeugaufnahme nach Anspruch 1, **dadurch gekennzeichnet, dass** der Einsatz (15) zumindest im Bereich des Gewindes (6) mit einem radialen Spiel innerhalb des Grundkörpers (13) der Werkzeugaufnahme (2) angeordnet ist.

3. Werkzeugaufnahme nach Anspruch 1 oder 2, **dadurch gekennzeichnet, dass** der Einsatz (15) über eine Formschlussverbindung (18; 24, 25) mit der Werkzeugaufnahme verbunden ist.

4. Werkzeugaufnahme nach Anspruch 3, **dadurch gekennzeichnet, dass** die Formschlussverbindung über einen Querstift (18) erfolgt, der durch eine Querbohrung (21) im Grundkörper (13) und eine Querbohrung (20) im Einsatz (15) verläuft.

5. Werkzeugaufnahme nach Anspruch 4, **dadurch gekennzeichnet, dass** der Innendurchmesser der Querbohrung (20) im Einsatz (15) oder im Grundkörper (13) größer als der Außendurchmesser des Querstifts (18) ist.

6. Werkzeugaufnahme nach Anspruch 3, **dadurch gekennzeichnet, dass** der Einsatz (15) ein Außenprofil (24) zum formschlüssigen Eingriff in ein dazu korrespondierendes Innenprofil (25) im Grundkörper (13) enthält.

7. Werkzeugaufnahme nach Anspruch 6, **dadurch gekennzeichnet, dass** der Einsatz (15) ein als Außensechskant ausgeführtes Außenprofil (24) aufweist und mit einem kleinen radialen Spiel in einem als Innensechskant ausgebildeten Innenprofil (25) im Grundkörper (13) angeordnet ist.

8. Werkzeugaufnahme nach einem der Ansprüche 1 bis 7, **dadurch gekennzeichnet, dass** der Aufnahmebereich (14) des Grundkörpers (13) mehrere konische Auflageflächen (8; 10) enthält.

9. Werkzeugaufnahme nach einem der Ansprüche 1 bis 8, **dadurch gekennzeichnet, dass** die konischen Auflageflächen (8; 10) unterschiedliche Kegelwinkel aufweisen.

10. Werkzeugaufnahme nach Anspruch 8 oder 9, **dadurch gekennzeichnet, dass** der Aufnahmebereich (14) des Grundkörpers (13) eine an der vorderen Stirnseite des Grundkörpers (13) angeordnete erste konische Auflagefläche (8) für eine erste Anlagefläche (7) des Einschraubwerkzeugs (1) und eine im Inneren des Grundkörpers (13) angeordnete zweite konischen Auflagefläche (10) für eine zweite Anlagefläche (9) des Einschraubwerkzeugs (1) enthält.

11. Werkzeugaufnahme nach einem der Ansprüche 1 bis 10, **dadurch gekennzeichnet, dass** das Gegengewinde (16) am Einsatz (15) als Innengwinde zur Aufnahme des als Außengewinde ausgeführten Gewindes (6) am Einschraubwerkzeug 1 ausgebildet ist.

12. Werkzeugaufnahme nach einem der Ansprüche 1 bis 11, **dadurch gekennzeichnet, dass** das Gegengewinde (16) als Spitz-, Trapez-, Rund-, Flach-oder Sägezahngewinde ausgebildet ist.

13. Werkzeugaufnahme nach einem der Ansprüche 1 bis 12, **dadurch gekennzeichnet, dass** der Einsatz (15) als eine vollständig innerhalb des Grundkörpers (13) angeordnete kürzere Hülse ausgebildet ist oder über eine hintere Stirnseite des Grundkörpers (13) hinaus vorsteht und an seinem dem Gegengewinde (16) gegenüberliegenden hinteren Ende einen Ringabsatz (22) zur Anlage an der hinteren Stirnseite des Grundkörpers (13) aufweist.

14. Werkzeuganordnung mit einer Werkzeugaufnahme (2) und einem Einschraubwerkzeug (1), das mindestens eine konische Anlagefläche (9) zur Anlage an einer konischen Auflagefläche (10) der Werkzeugaufnahme (2) enthält, **dadurch gekennzeichnet, dass** die Werkzeugaufnahme (2) nach einem der Ansprüche 1 bis 13 ausgebildet ist.

15. Werkzeuganordnung nach Anspruch 14, **dadurch gekennzeichnet, dass** die Werkzeugaufnahme (2) eine erste konische Auflagefläche (8) an der vorderen Stirnseite des Grundkörper (13) und eine zweite konische Auflagefläche (10) im Inneren des Grundkörper (13) enthält und dass das Einschraubwerkzeug (1) eine erste konischen Anlagefläche (7) zur Anlage an der ersten konischen Auflagefläche (8) des Grundkörpers (13) und eine zweiten konische Anlagefläche (9) zur Anlage an der zweiten konischen Auflagefläche (10) im Inneren des Grundkörpers (13) aufweist.

## Claims

1. Tool receptacle (2) for a screw-in tool (1), having a basic body (13) which comprises a receiving region (14) having at least one conical support surface (10) for supporting a corresponding conical contact surface (9) of the screw-in tool (1), wherein an insert (15) which is movable transversely to the longitudinal axis (17) of the basic body (13), is secured against rotation with respect to the basic body (13) and has a mating thread (16) for a thread (6) on the screw-in tool (1) is arranged in the basic body (13), **characterized in that** at least one damping element (23) for damping the transverse movement of the insert (15) within the basic body (13) and for damping vibrations between the insert (15) and the basic body (13) is arranged between the insert (15) and the basic body (13).

2. Tool receptacle according to Claim 1, **characterized in that** the insert (15) is arranged, at least in the region of the thread (6), with a radial play within the basic body (13) of the tool receptacle (2).

3. Tool receptacle according to Claim 1 or 2, **characterized in that** the insert (15) is connected to the tool receptacle via a form-fitting connection (18; 24, 25).

4. Tool receptacle according to Claim 3, **characterized in that** the form-fitting connection occurs via a transverse pin (18) which extends through a transverse bore (21) in the basic body (13) and through a transverse bore (20) in the insert (15).

5. Tool receptacle according to Claim 4, **characterized in that** the inside diameter of the transverse bore (20) in the insert (15) or in the basic body (13) is greater than the outside diameter of the transverse pin (18).

6. Tool receptacle according to Claim 3, **characterized in that** the insert (15) comprises an outer profile (24) for form-fitting engagement in an inner profile (25), which corresponds thereto, in the basic body (13) .

7. Tool receptacle according to Claim 6, **characterized in that** the insert (15) has an outer profile (24) configured as an outer hexagon and is arranged with a small radial play in an inner profile (25), which takes the form of an inner hexagon, in the basic body (13).

8. Tool receptacle according to one of Claims 1 to 7, **characterized in that** the receiving region (14) of the basic body (13) comprises a plurality of conical support surfaces (8; 10).

9. Tool receptacle according to one of Claims 1 to 8, **characterized in that** the conical support surfaces (8; 10) have different cone angles.

10. Tool receptacle according to Claim 8 or 9, **characterized in that** the receiving region (14) of the basic body (13) comprises a first conical support surface (8), which is arranged on the front end side of the basic body (13), for a first contact surface (7) of the screw-in tool (1), and a second conical support surface (10), which is arranged in the interior of the basic body (13), for a second contact surface (9) of the screw-in tool (1).

11. Tool receptacle according to one of Claims 1 to 10, **characterized in that** the mating thread (16) on the insert (15) takes the form of an internal thread for receiving the thread (6), which is configured as an external thread, on the screw-in tool (1).

12. Tool receptacle according to one of Claims 1 to 11, **characterized in that** the mating thread (16) takes the form of a V-thread, trapezoidal thread, round thread, flat thread or sawtooth thread.

13. Tool receptacle according to one of Claims 1 to 12, **characterized in that** the insert (15) takes the form of a relatively short sleeve arranged completely within the basic body (13) or projects beyond a rear end side of the basic body (13) and has, at its rear end opposite the mating thread (16), an annular shoulder (22) for bearing on the rear end side of the basic body (13).

14. Tool arrangement having a tool receptacle (2) and a screw-in tool (1) which comprises at least one conical contact surface (9) for bearing on a conical support surface (10) of the tool receptacle (2), **characterized in that** the tool receptacle (2) is designed according to one of Claims 1 to 13.

15. Tool arrangement according to Claim 14, **characterized in that** the tool receptacle (2) comprises a first conical support surface (8) on the front end side of the basic body (13) and a second conical support surface (10) in the interior of the basic body (13), and **in that** the screw-in tool (1) has a first conical contact surface (7) for bearing on the first conical support surface (8) of the basic body (13) and a second conical contact surface (9) for bearing on the second conical support surface (10) within the basic body (13).

## Revendications

1. Logement d'outil (2) pour un outil de vissage (1) comprenant un corps de base (13) qui présente une région de réception (14) avec au moins une surface de support conique (10) pour l'appui d'une surface d'appui conique correspondante (9) de l'outil de vissage (1), un insert (15) avec un filetage conjugué (16) pour un filetage (6) sur l'outil de vissage (1), déplaçable transversalement à l'axe longitudinal (17) du corps de base (13) et fixé en rotation par rapport au corps de base (13), étant disposé dans le corps de base (13), **caractérisé en ce qu'**entre l'insert (15) et le corps de base (13) est disposé au moins un élément d'amortissement (23) pour amortir le mouvement transversal de l'insert (15) à l'intérieur du corps de base (13) et pour amortir des oscillations entre l'insert (15) et le corps de base (13).

2. Logement d'outil selon la revendication 1, **caractérisé en ce que** l'insert (15) est disposé au moins dans la région du filetage (6) avec un jeu radial à l'intérieur du corps de base (13) du logement d'outil (2).

3. Logement d'outil selon la revendication 1 ou 2, **caractérisé en ce que** l'insert (15) est connecté au logement d'outil par le biais d'une connexion à engagement par correspondance de formes (18 ; 24, 25) .

4. Logement d'outil selon la revendication 3, **caractérisé en ce que** la connexion par engagement par correspondance de formes s'effectue par le biais d'une goupille transversale (18) qui s'étend à travers un alésage transversal (21) dans le corps de base (13) et à travers un alésage transversal (20) dans l'insert (15).

5. Logement d'outil selon la revendication 4, **caractérisé en ce que** le diamètre intérieur de l'alésage transversal (20) dans l'insert (15) ou dans le corps de base (13) est supérieur au diamètre extérieur de la goupille transversale (18).

6. Logement d'outil selon la revendication 3, **caractérisé en ce que** l'insert (15) présente un profil extérieur (24) pour l'engagement par correspondance de formes dans un profil intérieur (25) correspondant à celui-ci dans le corps de base (13) .

7. Logement d'outil selon la revendication 6, **caractérisé en ce que** l'insert (15) présente un profil extérieur (24) réalisé sous forme de profil hexagonal extérieur et est disposé avec un petit jeu radial dans un profil intérieur (25) réalisé sous forme de profil hexagonal intérieur dans le corps de base (13).

8. Logement d'outil selon l'une quelconque des revendications 1 à 7, **caractérisé en ce que** la région de réception (14) du corps de base (13) présente plusieurs surfaces de support coniques (8 ; 10).

9. Logement d'outil selon l'une quelconque des revendications 1 à 8, **caractérisé en ce que** les surfaces de support coniques (8 ; 10) présentent des angles de conicité différents.

10. Logement d'outil selon la revendication 8 ou 9, **caractérisé en ce que** la région de réception (14) du corps de base (13) présente une première surface de support conique (8) disposée au niveau du côté frontal avant du corps de base (13), pour une première surface d'appui (7) de l'outil de vissage (1) et une deuxième surface de support conique (10) disposée à l'intérieur du corps de base (13) pour une deuxième surface d'appui (9) de l'outil de vissage (1).

11. Logement d'outil selon l'une quelconque des revendications 1 à 10, **caractérisé en ce que** le filetage conjugué (16) au niveau de l'insert (15) est réalisé sous forme de filetage intérieur pour recevoir le filetage (6) réalisé sous forme de filetage extérieur au niveau de l'outil de vissage (1) .

12. Logement d'outil selon l'une quelconque des revendications 1 à 11, **caractérisé en ce que** le filetage conjugué (16) est réalisé sous forme de filetage pointu, trapézoïdal, rond, plat ou en dents de scie.

13. Logement d'outil selon l'une quelconque des revendications 1 à 12, **caractérisé en ce que** l'insert (15) est réalisé sous forme de douille plus courte disposée complètement à l'intérieur du corps de base (13) ou fait saillie au-delà d'un côté frontal arrière du corps de base (13) et présente, au niveau de son extrémité arrière opposée au filetage conjugué (16), un épaulement annulaire (22) pour l'application contre le côté frontal arrière du corps de base (13).

14. Agencement d'outil comprenant un logement d'outil (2) et un outil de vissage (1) qui présente au moins une surface d'appui conique (9) pour l'appui contre une surface de support conique (10) du logement d'outil (2), **caractérisé en ce que** le logement d'outil (2) est réalisé selon l'une quelconque des revendications 1 à 13.

15. Agencement d'outil selon la revendication 14, **caractérisé en ce que** le logement d'outil (2) présente une première surface de support conique (8) au niveau du côté frontal avant du corps de base (13) et une deuxième surface de support conique (10) à l'intérieur du corps de base (13) et **en ce que** l'outil de vissage (1) présente une première surface d'appui conique (7) pour l'appui contre la première surface de support conique (8) du corps de base (13) et une deuxième surface d'appui conique (9) pour l'appui contre la deuxième surface de support conique (10) à l'intérieur du corps de base (13).
